# EUROPEAN PATENT APPLICATION

(11) **EP 1 039 360 A1**
(43) Date of publication of application: **27.09.2000**
(21) Application number: 99123966.6
(22) Date of filing: 06.12.1999
(51) Int. Cl.: G05D 23/13

(54) **Device for mixing hot and cold water, provided with a pressure regulator, for sanitary water systems**

(30) Priority: 18.03.1999 IT MI990545
(71) Applicant: O.M.B.G. S.r.l., 28010 Bolzano Novarese (Novara) (IT)
(72) Inventor: Boccalerio, Remo, 28010 Bolzano Novarese (Novara) (IT)
(74) Representative: Modiano, Guido, Dr.-Ing.

(57) **Abstract**

A device (1) for mixing hot and cold water, provided with a pressure regulator, for sanitary water systems, which comprises a hollow body (2) which is internally provided with a first chamber (3) connected to a cold water intake port (4), a second chamber (5) connected to a hot water intake port (6), and a third chamber (7) connected to an outlet port (8). The first chamber (3) and the second chamber (5) are connected to the third chamber (7) by means of a regulator element (9) which is provided with connecting ports whose water passage sections can be varied on command in order to vary the ratio between the hot water flow-rate and the cold water flow-rate from the first chamber and the second chamber to the third chamber. The regulator element (9) also comprises a pressure regulator which is adapted to compensate for differences in pressure between the first chamber (3) and the second chamber (5). The regulator element (9) is movable with respect to the body (2) of the device in order to vary the passage section of the connecting ports and is connected to a knob (10) which is associated outside the body (2) of the device. The regulator element (9) is connected to the knob (10) by connecting means (11) which are accommodated in an auxiliary chamber (12) which is separated with a watertight seal from the first chamber (3), from the second chamber (5) and from the third chamber (7).

## Description

The present invention relates to a device for mixing hot and cold water, provided with a pressure regulator, for sanitary water systems.

Devices for mixing hot and cold water in chosen ratios in sanitary water systems are known.

Among these devices, there are conventional devices which are commonly termed "thermostatic" and are internally provided with a temperature-sensitive element which automatically varies the ratio between the hot water flow-rate and the cold water flow-rate so as to keep the preset temperature of the delivered water substantially constant even in case of variations in the temperature or flow-rate of the hot or cold water supply.

Devices are also known which are capable of mixing hot and cold water so as to keep the preset mixed water temperature substantially constant despite variations in the pressure of the hot or cold water supplied to the device.

A device of this kind substantially consists of a main hollow body which contains a first chamber connected to a cold water intake port, a second chamber connected to a hot water intake port, and a third chamber connected to an outlet port. The first chamber and the second chamber are connected to the third chamber by means of a regulator element which is provided with connecting ports whose water passage sections can be varied on command by varying the position of the regulator element with respect to the main body, so as to vary the ratio between the hot water flow-rate and the cold water flow-rate from the first chamber and from the second chamber to the third chamber. Inside the regulator element, which is substantially constituted by a hollow cylindrical body which is internally provided, along its cylindrical lateral surface, with ports for connection respectively to the first chamber, to the second chamber and to the third chamber, there is a pressure regulator which automatically chokes the connecting ports leading to the first chamber or to the second chamber if a difference in pressure between the first chamber and the second chamber occurs.

In this device, the temperature of the mixed water is regulated by acting on a knob which is located on the outside of the main body and is connected to the regulator element. In practice, by actuating the knob, the regulator element is moved, varying the cross-section of the ports provided in the regulator element which connect the first chamber or the second chamber to the third chamber, accordingly varying the ratio between the hot water flow-rate and the cold water flow-rate and therefore varying the temperature of the mixed water.

The connection between the knob and the regulator element is achieved by means of a shaft which is accommodated in the first chamber and the movement of the regulator element in one direction is contrasted by a spring accommodated in the second chamber.

Owing to the fact that the shaft and the spring are constantly in contact with water, during use of the device scale may deposit on these elements, making it difficult to actuate the regulator element and requiring maintenance interventions in order to restore the correct operation of the device.

Moreover, the device is structurally complicated.

The aim of the present invention is to solve the above problems by providing a device for mixing hot and cold water, provided with a pressure regulator, for sanitary water systems in which the possibility of scale deposits is reduced, the device being in any case structured so that the formation of scale deposits does not hinder the actuation of the regulator element.

Within the scope of this aim, an object of the present invention is to provide a device which effectively avoids the formation of scale deposits on the elements that connect the regulator element to the corresponding actuation knob.

Another object of the present invention is to provide a device which is structurally simple and can be manufactured at competitive costs.

This aim, these objects and others which will become apparent hereinafter are achieved by a device for mixing hot and cold water, provided with a pressure regulator, for sanitary water systems, comprising a hollow main body which is internally provided with a first chamber connected to a cold water intake port, a second chamber connected to a hot water intake port, and a third chamber connected to an outlet port; said first chamber and said second chamber being connected to said third chamber by means of a regulator element which is provided with connecting ports whose water passage sections can be varied on command in order to vary the ratio between the hot water flow-rate and the cold water flow-rate from said first chamber and said second chamber to said third chamber, said regulator element also comprising a pressure regulator which is adapted to compensate for differences in pressure between said first chamber and said second chamber, said regulator element being movable with respect to said main body in order to vary the passage section of said connecting ports and being connected to a knob which is associated outside said main body, characterized in that said regulator element is connected to said knob by connecting means which are accommodated in an auxiliary chamber which is separated with a watertight seal from said first chamber, from said second chamber and from said third chamber.

Further characteristics and advantages of present the invention will become apparent from the following detailed description of a preferred but not exclusive embodiment of the device according to the invention, illustrated by way of non-limitative example in the accompanying drawings, wherein:
Figure 1 is an axial sectional view of the device according to the invention, with some elements shown partially in cross-section, in a first operating condition;
Figure 2 is a view, similar to Figure 1, of the device according to the invention in a second operating condition;
Figure 3 is a view, similar to the preceding Figures, of the device according to the invention in a third operating condition;

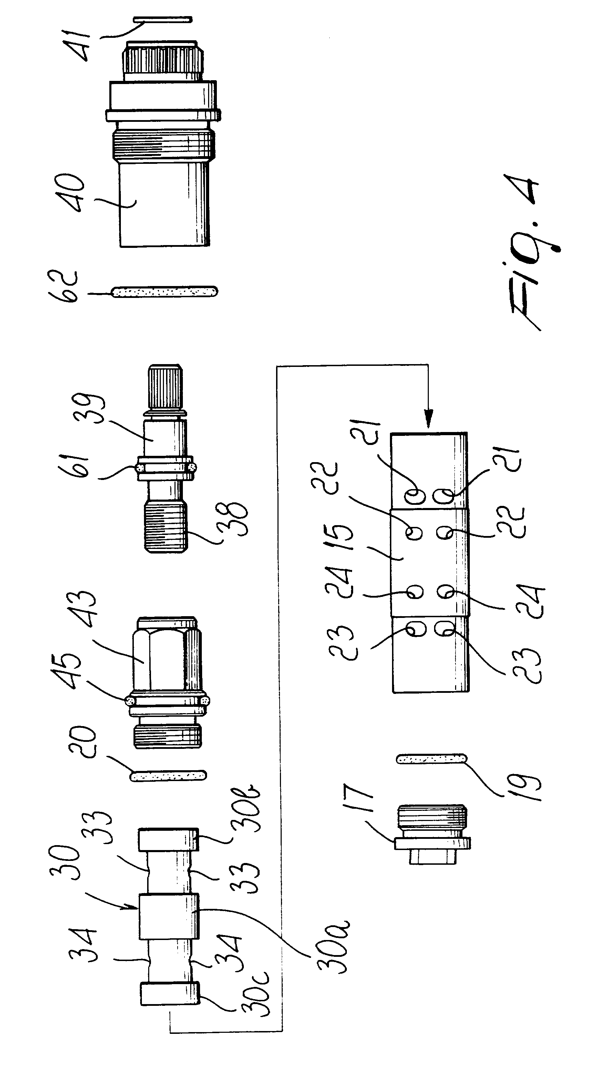

Figure 4 is an exploded side view of the assembly constituted by the regulator element, by the pressure regulator, and by the means for connecting the regulator element to the knob.

With reference to the above Figures, the device according to the invention, generally designated by the reference numeral 1, comprises a main body 2 which is elongated and internally hollow.

The main body 2 is internally provided with a first chamber 3, which is connected to an intake port 4 for the cold water, a second chamber 5, which is connected to a hot water intake port 6, and a third chamber 7, which is connected to an outlet port 8 through which the mixed water is delivered.

The first chamber 3 and the second chamber 5 are connected to the third chamber 7 by means of a regulator element 9 which is provided with connecting ports whose water passage sections can be varied on command in order to vary the ratio between the hot water flow-rate and the cold water flow-rate from the first chamber 3 and the second chamber 5 to the third chamber 7.

The regulator element 9 also comprises a pressure regulator which is adapted to compensate for differences in pressure between the first chamber 3 and the second chamber 5.

The regulator element 9 can move with respect to the main body 2 in order to vary the passage section of said connecting ports and is connected to a knob 10 which is associated outside the main body 2.

According to the invention, the regulator element 9 is connected to the knob 10 by connection means 11 which are accommodated in an auxiliary chamber 12 formed inside the main body 2 and separated from the chambers 3, 5 and 7 with a watertight seal.

More particularly, the first chamber 3, the third chamber 7 and the second chamber 5 have respective portions which are arranged sequentially in a direction which is parallel to the longitudinal axis of the main body 2.

The portion of the third chamber 7 is arranged between the portions of the first chamber 3 and of the second chamber 5 and is separated from them by means of a first diaphragm 13 and by means of a second diaphragm 14, both of which are crossed by two mutually coaxial gauged holes in which the regulator element 9 slides.

The regulator element 9 is provided with a substantially cylindrical body 15 which is arranged parallel to the longitudinal axis of the main body 2.

The body 15 is internally provided with an axial cavity 16 which is closed, at the axial ends of the body 15, by a plug 17 and a plug 18.

Both the plug 17 and the plug 18 are associated with the body 15 thanks to a threaded coupling with corresponding gaskets 19 and 20 interposed.

The following ports are provided on the lateral surface of the body 15: at least one first intake port 21, which connects the first chamber 3 to the cavity 16; at least one first outlet port 22, which connects the cavity 16 to the third chamber 7; at least one second intake port 23, which connects the second chamber 5 to the cavity 16; and at least one second outlet port 24, which connects the cavity 16 to the third chamber 7.

In the illustrated embodiment, the lateral surface of the body 15 is crossed by two first inlet ports 21, by two outlet ports 22, by two second intake ports 23 and by two outlet ports 24.

The body 15 is movable on command along its own axis with respect to the main body 2 so as to choke, or even completely block, the outlet ports 22 and 24 by means of the diaphragm 13 or the diaphragm 14, so as to allow to vary the ratio between the cold water flow-rate and the hot water flow-rate of hot water through the third chamber 7. In this manner it is possible to adjust the temperature of the water that flows out through the outlet port 8.

A pressure regulator is accommodated inside the cavity 16 and is substantially constituted by a cylinder 30 which is arranged coaxially to the cavity 16 and is axially slideable inside it.

More particularly, the cylinder 30 is provided with an intermediate region 30a whose outside diameter is a substantially equal, except for a slight clearance which allows the cylinder 30 to move axially, to the diameter of the cavity 16. The intermediate portion 30a divides the cavity 16 into two portions: a first portion is connected to the ports 21 and 22, while the other portion is connected to the ports 23 and 24.

The cylinder 30 is also provided, on its lateral surface and on opposite sides with respect to the intermediate portion 30a, with two narrower regions where the two portions into which the cavity 16 is divided are connected respectively to the ports 21 and 22 and to the ports 23 and 24.

The cylinder 30 is also provided with end portions 30b and 30c whose diameter is substantially equal to the diameter of the intermediate portion 30a.

Inside the body of the cylinder 30, starting from its axial ends, there are two compartments 31 and 32 which are hermetically separated from each other and which are connected, through holes 33 and 34, to the cavity 16 at the narrower regions of the cylinder 30 and are therefore connected respectively to the ports 21 and 22 and to the ports 23 and 24. In this manner, the water entering the cavity 16 through the ports 21 can flow into the compartment 31 and act with its pressure on an axial end of the cylinder 30, while the water that enters the cavity 16 through the ports 23 can flow into the compartment 32 and act with its pressure on the other axial end of the cylinder 30.

If a pressure difference occurs between the cold water in the chamber 3 and the hot water in the chamber 5, the cylinder 30, thanks to this pressure difference, which is transmitted to its axial ends through the ports 21 and 23, moves in one direction or the other, choking the port 21 or 23 that is connected to the chamber that is at the highest pressure. Said choking of the ports 21 or 23 tends to equalize the pressures of the water flowing through the ports 22 and 24 and therefore prevents abnormal pressure differences between the hot water supply and the cold water supply from leading to a variation in the preset ratio between the hot water flow-rate and the cold water flow-rates, thus keeping constant the temperature of the mixed water that flows out of the port 8, said temperature being set thanks to the axial positioning of the body 15.

The means for connecting the knob 10 to the regulator element 9 comprise a connection of the screw-and-nut type.

More particularly, the screw-and-nut connection comprises a threaded stem 38 which is formed at an axial end of a shaft 39 which is supported, so that it can rotate about its own axis, by the main body 2 at the longitudinal end of the main body 2 that supports the knob 10.

More particularly, the shaft 39 is arranged so that its axis is coaxial to the body 15 and protrudes from the main body 2 with an axial end which is connected to the knob 10.

The shaft 39 is supported, so that it can rotate about its own axis, inside a bush 40 which is fixed to the main body 2 by means of a threaded coupling.

The shaft 39 is locked axially with respect to the bush 40 by means of an elastic ring 41.

The auxiliary chamber 12 is formed inside the bush 40 that protrudes into the first chamber 3.

The threaded stem 38 couples to a female thread 42 which is formed inside a bushing 43 which is rigidly coupled to the plug 18 that closes an axial end of the body 15. The bushing 43 is arranged coaxially to the body 15 and to the shaft 39 and can only perform an axial translatory motion with respect to the bush 40, because rotation about its own axis is prevented owing to the particular coupling provided between the bushing 43 and the bush 40.

In the illustrated embodiment, the bushing 43 is in fact externally provided with a portion which has a polygonal transverse cross-section and is coupled to a portion of the internal surface of the bush 40 which has a corresponding shape.

The auxiliary chamber 12 is formed inside the bush 40 and is separated hermetically from the first chamber 3 by means of a gasket 45 which is interposed between the bushing 43 and the internal surface of the bush 40.

In this manner, the auxiliary chamber 12 that accommodates the coupling between the threaded stem 38 and the female thread 42 is hermetically separated from the first chamber 3 and from the chambers 5 and 7 and therefore said coupling does not make contact with the water that flows in the main body 2.

Advantageously, on the cold water intake port 4 and on the hot water intake port 6 there are respective conventional check valves, not shown for the sake of simplicity, which prevent backflow of the water toward the supply ducts connected to the ports 4 and 6, and there are also filters for retaining any impurities in the supply water.

The connection between the third chamber 7 and the outlet port 8 is controlled by a flow control element which can be actuated by means of a knob 50 so as to vary the flow-rate of mixed water that is delivered.

The body 15 of the regulator element 9 can be made of metallic material or synthetic material with high resistance to the formation of scale deposits.

The cylinder 30 can be made of metallic or synthetic or ceramic material according to requirements and in any case so as to minimize the risk of scale deposits on this component.

For the sake of completeness in description it should be noted that a gasket 61 is interposed between the shaft 39 and the bush 40 and that a gasket 62 is interposed between the bush 40 and the main body 2.

The operation of the device according to the invention is as follows.

By acting on the knob 50, the user connects the outlet port 8 to the chamber 7 and therefore achieves the delivery of water through the outlet port 8.

By acting on the knob 10, the user can vary according to his requirements the temperature of the water in output, since by rotating the knob 10 he produces the movement of the regulator element 9 along its axis with respect to the main body 2, choking by the intended extent the outlet ports 22 and 24 by blocking said ports by means of the diaphragms 13 and 14.

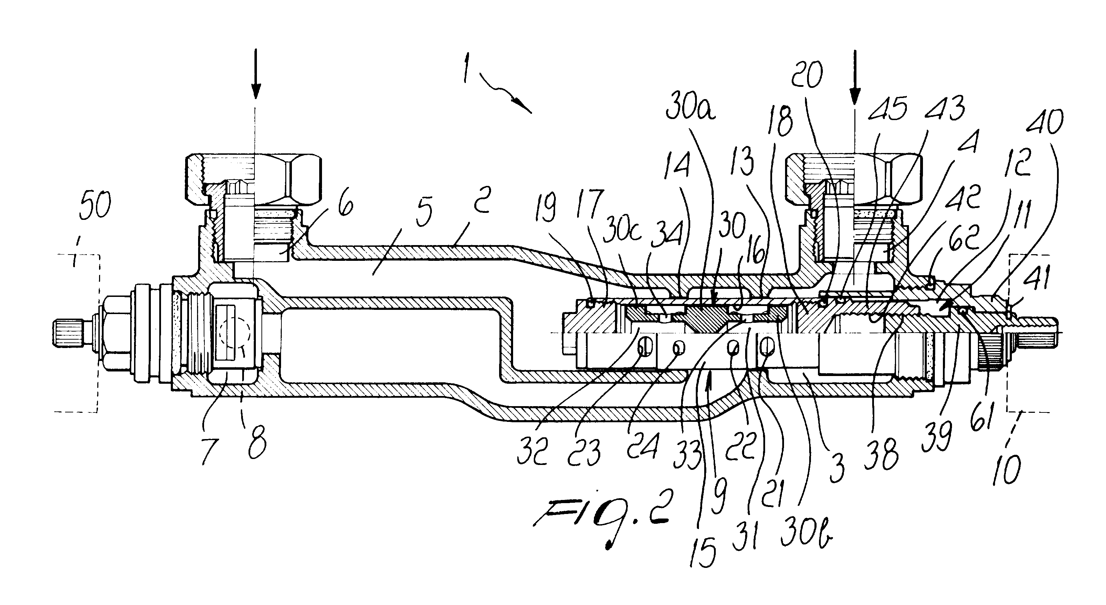

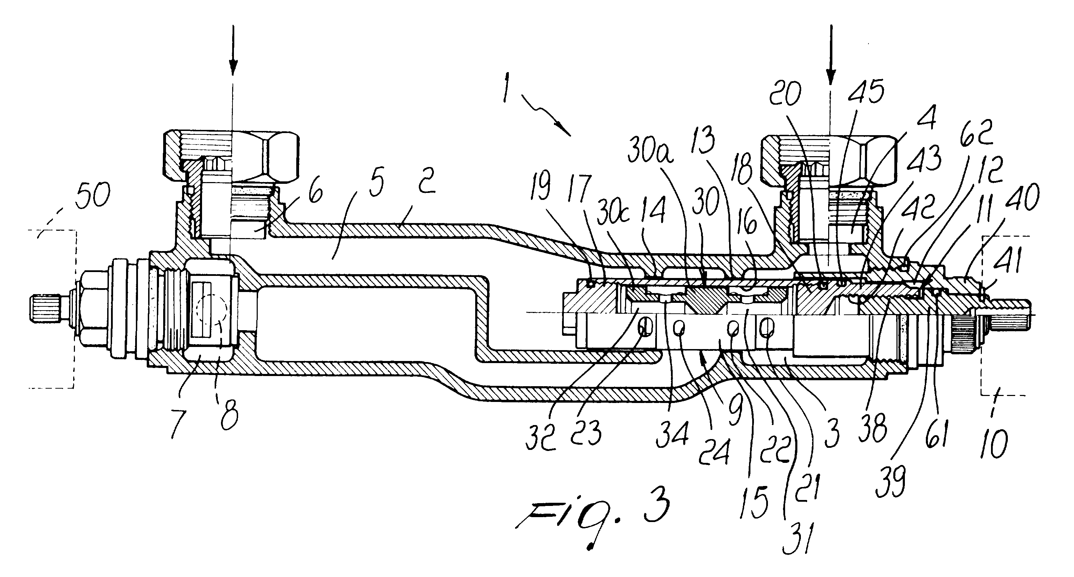

Figure 2 illustrates the position of the regulator element 9 that corresponds to the delivery of cold water only, because the outlet ports are completely blocked by the diaphragm 14, whereas Figure 3 illustrates the position of the regulator element 9 that corresponds to the delivery of hot water only, because the outlets 22 are completely blocked by the diaphragm 13.

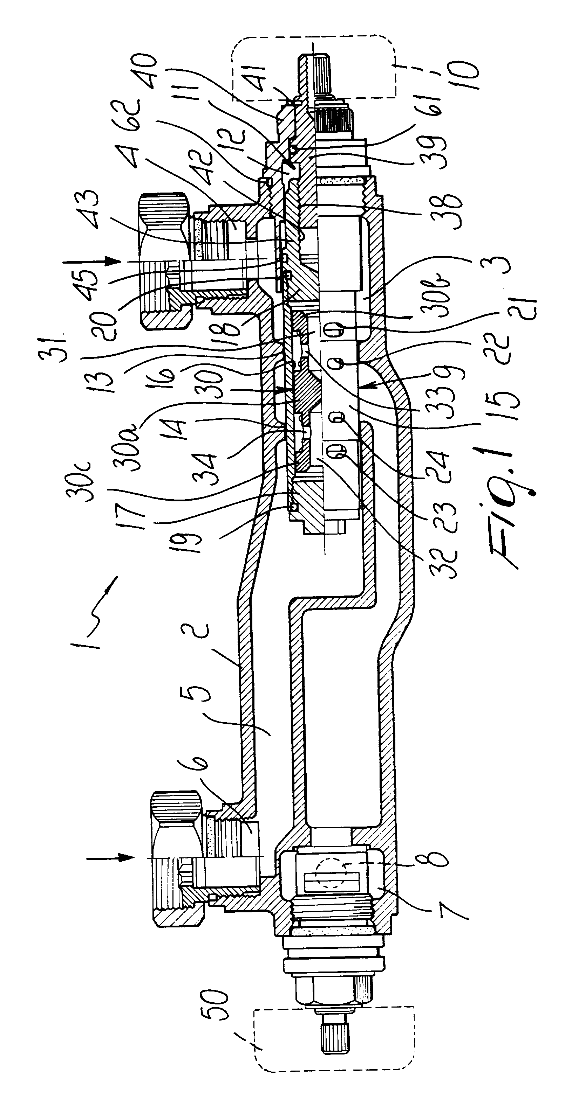

Figure 1 illustrates an intermediate position of the regulator element 9 which corresponds to a delivery of hot water mixed with cold water.

If differences in pressure between the cold water supplied in the chamber 3 and the hot water supplied in the chamber 5 occur during the delivery of mixed water, said differences in pressure produce a movement of the cylinder 30, which by choking the ports 21 or the ports 23 practically cancels the effects of this pressure difference on the flow-rate of hot or cold water fed to the third chamber 7 and therefore keeps substantially constant the ratio between the hot water flow-rate and the cold water flow-rate set by the user even in the presence of pressure variations on the supply ducts connected to the ports 4 and 6.

It should be noted that since the connection between the knob 10 and the regulator element 9 is achieved by means which are accommodated inside the auxiliary chamber 12, which is not affected by the flow of water, the formation of scale deposits on said connecting means is effectively avoided, achieving optimum operation of the device even after many hours of operation.

In practice, it has been observed that the device according to the invention fully achieves the intended aim and objects, since, by virtue of the fact that the means connecting the actuation knob to the regulator element are accommodated in a chamber which is not affected by the water flow that passes through the device, very simple actuation of the regulator element is achieved even after many hours of operation together with a higher reliability of the device, at the same time reducing maintenance interventions.

The device thus conceived is susceptible of numerous modifications and variations, all of which are within the scope of the inventive concept; all the details may furthermore be replaced with other technically equivalent elements.

In practice, the materials used, as well as their dimensions, may be any according to requirements and to the state of the art.

The disclosures in Italian Patent Application No. MI99A000545 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for mixing hot and cold water, provided with a pressure regulator, for sanitary water systems, comprising a hollow main body which is internally provided with a first chamber connected to a cold water intake port, a second chamber connected to a hot water intake port, and a third chamber connected to an outlet port; said first chamber and said second chamber being connected to said third chamber by means of a regulator element which is provided with connecting ports whose water passage sections can be varied on command in order to vary the ratio between the hot water flow-rate and the cold water flow-rate from said first chamber and said second chamber to said third chamber, said regulator element also comprising a pressure regulator which is adapted to compensate for differences in pressure between said first chamber and said second chamber, said regulator element being movable with respect to said main body in order to vary the passage section of said connecting ports and being connected to a knob which is associated outside said main body, characterized in that said regulator element is connected to said knob by connecting means which are accommodated in an auxiliary chamber which is separated with a watertight seal from said first chamber, from said second chamber and from said third chamber.

2. The device according to claim 1, characterized in that said main body has an elongated shape and in that said first chamber, said third chamber and said second chamber have respective portions which are arranged sequentially in a direction which is parallel to the longitudinal axis of said main body, said regulator element being arranged at said portions of said chambers.

3. The device according to claim 2, characterized in that said portions of said chambers comprise a portion of the first chamber, a portion of the second chamber and a portion of the third chamber which is arranged between the portions of the first and second chambers, said chamber portions being mutually separated by two diaphragms which are crossed by said regulator element, which has a substantially cylindrical body which is parallel to the longitudinal axis of said main body.

4. The device according to one or more of the preceding claims, characterized in that said regulator element comprises a substantially cylindrical body inside which there is a cavity which is closed at the axial ends of the body of the regulator element; the following ports being provided on the lateral surface of said body of the regulator element: at least one first intake port, which is connected to said first chamber and to said cavity; at least one first outlet port; at least one second intake port, which is connected to said second chamber and to said cavity; and at least one second outlet port; the passage section of said outlet ports connected to said third chamber being controllable by means of the axial movement of said body of the regulator element with respect to said main body, which causes said outlet ports to at least partially interfere with the diaphragm that divides said first chamber from said third chamber or with the diaphragm that divides said second chamber from said third chamber.

5. The device according to one or more of the preceding claims, characterized in that said pressure regulator comprises a cylinder which is accommodated coaxially in the cavity of said body of the regulator element and is adapted to choke said first intake port and said second intake port of the regulator element, said cylinder being able to move axially, owing to pressure differences between said first chamber and said second chamber, with respect to said body of the regulator element in order to choke said first intake port or said second intake port of the regulator element which is connected to the chamber that is at the highest pressure between said first chamber and said second chamber.

6. The device according to one or more of the preceding claims, characterized in that said connecting means comprise a connection of the screw-and-nut type which is interposed between said knob and said regulator element.

7. The device according to one or more of the preceding claims, characterized in that said screw-and-nut connection comprises a stem which is threaded externally and is arranged coaxially to the body of said regulator element, said threaded stem being supported so that it can rotate about its own axis by said main body and rotating rigidly with said knob, said threaded stem being coupled to a female thread formed inside a bushing which is connected to an axial end of the body of said regulator element, said bushing being able to move parallel to the longitudinal axis of said main body and being prevented from rotating about its own axis.

8. The device according to one or more of the preceding claims, characterized in that said auxiliary chamber is formed in a bush which is connected to a longitudinal end of said main body that supports said knob, said bush protruding partially into said first chamber and slidingly accommodating said bushing and rotatably accommodating said threaded stem, the region of said bush that accommodates the portion of said bushing and of said threaded stem in mutual connection being hermetically separated from said first chamber by means of at least one sealing gasket which is interposed between said bush and said bushing.

9. The device according to one or more of the preceding claims, characterized in that a portion of said bushing has a polygonal transverse cross-section and is coupled to a portion of the internal surface of said bush which is shaped correspondingly.

10. The device according to one or more of the preceding claims, characterized in that respective check valves are arranged on said cold water intake port and on said hot water intake port.
